# EUROPÄISCHE PATENTSCHRIFT

(11) **EP 4 242 596 B1**
(45) Veröffentlichungstag und Bekanntmachung des Hinweises auf die Patenterteilung: **18.06.2025**
(21) Anmeldenummer: 22214452.9
(22) Anmeldetag: 19.12.2022
(51) Int. Cl.: G01D 11/24

(54) **SENSOREINHEIT**
SENSOR UNIT
UNITÉ DE CAPTEUR

(30) Priorität: 10.03.2022 DE 102022105605
(43) Veröffentlichungstag der Anmeldung: 13.09.2023
(73) Patentinhaber: elobau GmbH & Co. KG, 88299 Leutkirch im Allgäu (DE)
(72) Erfinder: SONNTAG, Michael, 76131 Karlsruhe (DE); PRINZ, Michael, 88299 Leutkirch (DE)
(74) Vertreter: VKK Patentanwälte PartG mbB

(56) Entgegenhaltungen:
- EP-A1- 1 586 868
- EP-A1- 2 015 033
- EP-A2- 0 943 469
- DE-A1- 102017 103 704
- DE-A1- 102017 200 414
- US-A1- 2010 097 050
- US-A1- 2013 031 976

## Beschreibung

Die vorliegende Erfindung betrifft eine Sensoreinheit aufweisend eine Elektronikeinheit, einen ersten Gehäuseteil und einen damit verbundenen zweiten Gehäuseteil, wobei die Elektronikeinheit mit dem ersten Gehäuseteil verbunden und in den Innenraum ragend ist, wobei ein den ersten Gehäuseteil durchsetzender Kontaktbereich vorgesehen ist, wobei die Elektronikeinheit mindestens eine Leiterplatte mit mindestens zwei, miteinander elektrisch leitend verbundenen, Leiterplattenabschnitten aufweist.

Sensoreinheiten, insbesondere Lage- oder Neigungssensoren, werden unter anderem in rauen, von starken Umwelteinflüssen bestimmten Umgebungen eingesetzt. Zudem werden diese an verschiedenste Maschineneinheiten, wie Fahrzeuge oder Produktionsmaschinen angebracht und müssen daher entsprechend verschiedenartig ausgebildet sein.

Aus dem Stand der Technik sind Sensoreinheiten bekannt, die an bzw. in einem Gehäuse einen Kontaktbereich zur elektrischen Verbindung mit der jeweiligen Maschineneinheit sowie eine Leiterplatte aufweisen, wobei Leiterplatte und Kontaktbereich üblicherweise mittels isolierter Leitungen innerhalb des Gehäuses der Sensoreinheit miteinander verbunden sind. Um sowohl die Leiterplatte als auch die Leitungen und den Kontaktbereich innerhalb des Gehäuses vor äußeren Einflüssen zu schützen, wird das restliche Volumen des Gehäuses üblicherweise beispielsweise mit einem Silikon oder Harz ausgegossen. Dies schützt diese Bauteile sicher, erschwert jedoch nachträglich Änderungen oder Modulationen der Hardware der Sensoreinheit. Die Leiterplatte ist nicht länger zerstörungsfrei erreichbar oder recyclebar.

Die US 4,864,156 offenbart einen Näherungsschalter, der ein Hauptgehäuse, ein Zwischensteckergehäuse und ein Sensorgehäuse aufweist, wobei jeweils eine Leiterplatte in einem Gehäuse angeordnet ist und die Leiterplatten des Zwischensteckergehäuses und des Sensorgehäuses elektrisch leitend miteinander verbunden sind und die Leiterplatten des Zwischensteckergehäuses und des Hauptgehäuses galvanisch voneinander getrennt sind.

Die US 2003/0123242 A1 offenbart ein Gehäuse für einen Sensor, wobei das Sensorgehäuse an mindestens einer Gehäuseseite eine Beschichtung aufweist, welche besonders resistent gegenüber äußeren Einflüssen wie Schweißblitzen ist. Darüber hinaus weist das Gehäuse drei Gehäuseteile auf, die einen Innenraum definieren, in dem eine Elektronikeinheit angeordnet ist.

Die US 2010/097050 A1 offenbart einen Abstandssensor.

Die vorliegende Erfindung stellt sich daher die Aufgabe, eine möglichst einfach zu montierende, robuste und leicht transformierbare Sensoreinheit anzugeben.

Diese Aufgabe wird gelöst durch eine Sensoreinheit aufweisend eine Elektronikeinheit, einen ersten Gehäuseteil und einen damit verbundenen zweiten Gehäuseteil, wobei erster und zweiter Gehäuseteil zwischen sich einen Innenraum bilden und von diesem jeweils weggerichtet je eine Gehäuseteilaußenseite aufweisen, wobei die Elektronikeinheit mit dem ersten Gehäuseteil verbunden und in den Innenraum ragend ist, wobei ein den ersten Gehäuseteil durchsetzender Kontaktbereich vorgesehen ist, wobei die Elektronikeinheit mindestens eine Leiterplatte mit mindestens zwei, miteinander elektrisch leitend verbundenen, Leiterplattenabschnitten aufweist, wobei ein erster Leiterplattenabschnitt elektrisch leitend zwischen dem Kontaktbereich und einem zweiten Leiterplattenabschnitt angeordnet ist.

Erster und zweiter Gehäuseteil sind vorteilhaft kraftschlüssig oder formschlüssig reversibel miteinander verbunden, um bei einer möglichen Anpassung der Elektronikeinheit den Innenraum für einen Nutzer ohne Weiteres zugänglich zu machen. Sie sind bevorzugt aus einem Kunststoff mit hoher Festigkeit, Steifigkeit, und sehr guten Reibwiderständen gebildet, vorteilhaft aus ABS oder PBT, insbesondere mit Glasfaser verstärkt. Der Innenraum ist erfindungsgemäß derart ausgebildet, dass er neben sämtlichen im Innenraum angeordneten Komponenten auch ein Gas aufnimmt, insbesondere Umgebungsluft oder Stickstoff, was mögliche Temperaturschwankungen durch äußere Einflüsse, welche gegebenenfalls die Messergebnisse beeinflussen, verhindert. Die Nutzung eines Gases wie Stickstoff zum Befüllen des Innenraumes verhindert erfindungsgemäß ein Entflammen des Innenraums bei einer Fehlfunktion der Sensoreinheit. Die Elektronikeinheit ist mindestens mittelbar mit dem ersten Gehäuseteil verbunden, insbesondere kraft- und/oder formschlüssig. Der Kontaktbereich weist mindestens einen Kontaktpunkt sowie einen Kontaktrahmen auf, wobei der Kontaktrahmen einstückig mit dem ersten Gehäuseteil oder alternativ kraft- oder formschlüssig mit diesem verbunden ist. Erfindungsgemäß sind Elektronikkomponenten abhängig von ihrer Verwendung auf dem ersten oder dem zweiten Leiterplattenabschnitt angeordnet. Der erste und der zweite Leiterplattenabschnitt können erfindungsgemäß einstückig oder als zwei einzelne, sogar örtlich voneinander getrennten Leiterplatten ausgebildet sein. Der Vorteil einer Nutzung von zwei einzelnen und unabhängig voneinander angeordneten Leiterplattenabschnitten ist deren flexible Kombinationsmöglichkeit miteinander. Demnach sind vorteilhaft alle Elektronikkomponenten einer Aufgabenstellung auf einem Leiterplattenabschnitt und die einer anderen Aufgabenstellung auf einem anderen Leiterplattenabschnitt angeordnet. Es ergibt sich so ein Baukastenprinzip, wonach die Sensoreinheit je nach Anwendungsfall optimal an die jeweiligen Anforderungen angepasst werden kann. Dies ermöglicht eine hohe Modularität und Einsetzbarkeit in verschiedensten Verwendungsbereichen unter einer nur geringfügigen Änderung eines Teilbereichs der Elektronikeinheit. Die elektrisch leitende Anordnung des ersten Leiterplattenabschnittes zwischen dem Kontaktbereich und dem zweiten Leiterplattenabschnitt trägt maßgeblich zu den zuvor genannten Vorteilen der Erfindung bei, da hierdurch eine normierte Verbindung zwischen erstem und zweiten Leiterplattenabschnitt ausgebildet ist und die Leiterplattenabschnitte unabhängig von den darauf angeordneten Elektronikkomponenten oder einem angeordneten Kontaktbereich miteinander verbindbar und einsetzbar sind.

In Ausgestaltung der Erfindung ist vorgesehen, dass der erste Leiterplattenabschnitt im Betriebszustand an dem Kontaktbereich anliegende elektrische Spannung und/oder Stromstärke an den zweiten Leiterplattenabschnitt im Wesentlichen unverändert übertragend ist. In besonders vorteilhafter Weise sind die Elektronikkomponenten, die zur Kontaktierung des Kontaktbereiches und damit zur Verbindung mit der restlichen Maschine ausgebildet sind, auf dem ersten Leiterplattenabschnitt angeordnet, um bei Veränderung des Kontaktbereichs gegebenenfalls lediglich den ersten Leiterplattenabschnitt anpassen zu müssen. Eine Anordnung weiterer Elektronikkomponenten auf dem ersten Leiterplattenabschnitt, insbesondere von Leuchtmitteln oder optischen Anzeigen, welche unabhängig von den, auf dem zweiten Leiterplattenabschnitt angeordneten, Elektronikkomponenten funktionsfähig sind, ist ebenfalls vorteilhaft. Zudem sind in besonders vorteilhafter Weise Elektronikkomponenten wie Sicherungen, insbesondere Feinsicherungen oder 0 Ω Widerstände auf dem ersten Leiterplattenabschnitt zur flexiblen elektrischen Kontaktierung zwischen dem mindestens einen Kontaktpunkt und verschiedenen Bereichen des ersten Leiterplattenabschnittes angeordnet. Die für die eigentliche Funktion der Sensoreinheit notwendigen Elektronikkomponenten müssen nicht umgeordnet werden, da die elektromagnetischen Störfelder des sich ändernden ersten Leiterplattenabschnitts durch die abgegrenzte Anordnung lediglich einen sehr geringen oder keinen Einfluss haben. Ebenso besteht die Möglichkeit, den ersten Leiterplattenabschnitt mit einem für eine Maschineneinheit passenden Kontaktbereich an einen funktional anderen zweiten Leiterplattenabschnitt anzuordnen, um mehrere verschieden wirkende Sensoreinheiten für einen Steckplatz zu erhalten. Mit anderen Worten ist der Vorteil zweifach: zum einen kann ein Hersteller der erfindungsgemäßen Sensoren einen bereits für eine Maschine ausgebildeten Sensor sehr einfach anpassen, sollte sich maschinenseitig eine Änderung ergeben, zum anderen kann der Hersteller unterschiedliche Sensoren in ein und demselben Gehäuse mit ein und demselben Kontaktbereich anordnen und so dem Maschinenhersteller unterschiedliche Sensoren zur Auswahl stellen, ohne dass der Maschinenhersteller unterschiedliche Kontaktmöglichkeiten bereitstellen müsste.

In vorteilhafter Weise ist der erste Gehäuseteil derart im Wesentlichen plattenförmig ausgebildet, dass er einen geringeren Teil des in den Innenraum des Gehäuses ragenden Teils der Elektronikeinheit überdeckt als der zweite Gehäuseteil. Aufgrund des im Wesentlichen plattenförmigen ersten Gehäuseteils sind sämtliche Komponenten während der Montage der Elektronikeinheit frei zugänglich, ein Hineingreifen in einen engen Innenraum ist nicht erforderlich. Hierbei ist die plattenförmige Ausbildung des ersten Gehäuseteils in erster Linie so zu verstehen, dass der erste Gehäuseteil seine maximale Querschnittsfläche parallel zu seiner Hauptebene aufweist.

In Weiterbildung der Erfindung ist vorgesehen, dass der erste Gehäuseteil weniger als 30%, insbesondere weniger als 20%, vorzugsweise weniger als 10% des in den Innenraum ragenden Teils der Elektronikeinheit überdeckt. In besonders vorteilhafter Weise sind demnach sämtliche Einheiten, welche im Innenraum angeordnet sind, an dem ersten Gehäuseteil montierbar und zudem leicht zugänglich. Der zweite Gehäuseteil schließt den Innenraum ab, sodass die Elektronikeinheit darin sicher aufgenommen ist.

In Ausgestaltung der Erfindung ist vorgesehen, dass ein Leiterplattenabschnitt der Elektronikeinheit im Wesentlichen parallel zu der Hauptebene des plattenförmigen ersten Gehäuseteils orientiert und die Elektronikeinheit mit diesem mindestens mittelbar an dem ersten Gehäuseteil befestigt ist und/oder die zwei Leiterplattenabschnitte im Wesentlichen orthogonal zueinander angeordnet sind. In besonders vorteilhafter Weise ist der Kontaktrahmen des Kontaktbereichs parallel und je nach Beschaffenheit der Kontaktpunkte dicht zu dem parallel zur Hauptebene angeordneten Leiterplattenabschnitt angeordnet sowie der mindestens eine Kontaktpunkt im Wesentlichen orthogonal zu dem Kontaktrahmen und zu dem parallel zur Hauptebene angeordneten Leiterplattenabschnitt angeordnet ist. Übertragungsleitungen, welche einen zusätzlichen Aufnahmeraum benötigen würden und zudem anfällig für Beschädigungen durch Stöße oder Vibrationen sind, sind vorteilhaft vermieden. Je weniger elektrische Kontaktierungsstellen notwendig sind, umso geringer ist das Risiko einer Beschädigung, Zerstörung oder fehlerhaften Fertigung einer von diesen. Die feste Verbindung zwischen dem parallel zur Hauptebene angeordneten Leiterplattenabschnitt und dem Kontaktbereich durch das direkte Auflöten des mindestens einen Kontaktpunktes auf den parallel zur Hauptebene angeordneten Leiterplattenabschnitts ermöglicht durch eine form- und/oder kraftschlüssige Verbindung zwischen dem Kontaktbereich und dem ersten Gehäuseteil eine zuverlässige Positionierung der Elektronikeinheit, was eine Beschädigung dieser und des Kontaktbereichs minimiert. Der mindestens eine Kontaktpunkt ist dabei form- und/oder kraftschlüssig mit dem Kontaktrahmen verbunden, wobei der mindestens eine Kontaktpunkt insbesondere mit dem Kontaktrahmen verpresst ist. Die Ausbildung des Kontaktrahmen als getrennte Komponente zu dem ersten Gehäuseteil ist vorteilhaft, da durch dessen flache zum ersten Leiterplattenabschnitt parallel ausgerichtete Hauptfläche der mindestens eine Kontaktpunkt auf den ersten Leiterplattenabschnitt in einer durch den Kontaktrahmen vordefinierten Anordnung maschinell auflötbar, insbesondere mittels Wellenlöten verbindbar ist. Bei einer einstückigen Ausbildung des Kontaktrahmens mit dem ersten Gehäuseteil ist die erforderliche Maßeinhaltung zur korrekten Positionierung des mindestens einen Kontaktpunktes auf Grund der geringeren Anzahl an Toleranzbereichen vereinfacht. Eine zuverlässige Positionierung der Elektronikeinheit ist bei dieser Ausführungsform über eine formschlüssige Verbindung zwischen Elektronikeinheit und erstem Gehäuseteil ausbildbar. Die orthogonale Anordnung der zwei Leitplattenabschnitte ist besonders vorteilhaft, da hierdurch eine platzsparende und modulartige Elektronikeinheit ausgebildet ist.

Erfindungsgemäß weist die Sensoreinheit eine am ersten Gehäuseteil befestigte und die Elektronikeinheit kontaktierende Stützkonstruktion auf, wobei die Stützkonstruktion in einer Führung des zweiten Gehäuseteils geführt ausgebildet ist. Die Stützkonstruktion ist bevorzugt lösbar mit dem ersten Gehäuseteil und/oder der Elektronikeinheit verbunden. Insbesondere ist die Verbindung als eine kraft- oder formschlüssige, besonders bevorzugt als eine Schraubverbindung ausgebildet. Die Stützkonstruktion ist derart ausgebildet, dass zwischen ihr und der Elektronikeinheit eine möglichst starre Verbindung zur direkten Übertragung von auftretenden Kräften oder Vibrationen ausgebildet ist. Damit trägt die Elektronikeinheit neben der Stützkonstruktion zur Steigerung der Gesamtfestigkeit der Sensoreinheit bei.

In einer Weiterbildung der Erfindung ist zwischen erstem und zweitem Gehäuseteil eine Formdichtung angeordnet. Die Formdichtung dichtet vorteilhaft den Innenraum vor Schmutz, Wasser und Staub ab, insbesondere weist der Innenraum auch hierdurch mindestens die Schutzklasse IP 68 auf. Die Formdichtung ist vorteilhaft aus einem Gummi, insbesondere aus EPDM, NBR, FKM oder BR ausgebildet.

In Ausgestaltung der Erfindung ist vorgesehen, dass der Kontaktbereich von einer Ausformung des ersten Gehäuseteils umrandet umgeben ausgebildet ist. Die Ausformung schützt vorteilhaft den Kontaktbereich vor einer Beschädigung. Sofern der Kontaktbereich als einer mit vielen von der Hauptebene wegragenden Kontaktpunkten ausgebildet ist, weist die Ausformung mindestens die Länge der wegragenden Kontaktpunkte auf, um diese vor einer Beschädigung zu schützen. Die Ausformung weist vorteilhaft Ausformungsnuten auf. Eine Ausbildung der Ausformungsnuten als Ausformungsstege ist ebenfalls vorteilhaft, um ein sicheres Einführen des Kontaktbereichs in eine Maschineneinheit zu gewährleisten und im Kontaktbereich auftretende Querkräfte, welche zu einer Beschädigung führen könnten, möglichst zu minimieren. Bevorzugt ist die Ausformung derart ausgebildet, dass sie eine fehlerhafte Kontaktierung zwischen Kontaktbereich und einer Maschineneinheit, insbesondere über unterschiedlich ausgestaltete Ausformungsführungen oder Ausformungsnuten verhindernd ist.

In vorteilhafter Weise weist der erste Gehäuseteil mindestens eine Verbindungsmöglichkeit zur mechanischen Verbindung der Sensoreinheit mit einer Maschineneinheit auf. Die Nutzung einer handelsüblichen Verbindungsmöglichkeit ist hierbei vorteilhaft. In besonders vorteilhafter Weise ist die Verbindungsmöglichkeit reversibel, insbesondere als Schnapphaken, Bajonett, oder Schraubverbindung ausgebildet. Demnach ist die Verbindung zwischen Sensoreinheit und Maschineneinheit kraftschlüssig und/oder formschlüssig. Die Verbindungsmöglichkeit ist vorteilhaft möglichst nahe, bzw. neben dem Kontaktbereich, insbesondere innerhalb der Ausformung des ersten Gehäuseteils, welche den Kontaktbereich umrandet, ausgebildet. Somit ist eine zuverlässige Kontaktierung des Kontaktbereiches auch bei aufkommenden Vibrationen oder Stößen durch die Maschineneinheit oder andere Umgebungseinflüsse gewährleistet.

In Weiterbildung der Erfindung ist vorgesehen, dass der zweite Gehäuseteil eine optische Anzeige aufweist, insbesondere eine durch ein auf der Leiterplatte angeordnetes Leuchtmittel und einem in dem zweiten Gehäuseteil endenden Lichtleiter und/oder ein durch einen lichtdurchlässigen Abschnitt im zweiten Gehäuseteil gebildetes Leuchtmittel. Die optische Anzeige ermöglicht die Erkennung von beispielsweise einer korrekten Kontaktierung zwischen Maschineneinheit und Kontaktbereich für einen Anwender. Ebenfalls können durch die optische Anzeige vorteilhaft Warnsignale beispielsweise bei Überhitzung oder falscher Kontaktierung ausgegeben werden. Die Ausgabe eines Messwertes direkt an der Sensoreinheit über die optische Anzeige ist ebenfalls möglich. Das Leuchtmittel ist in vorteilhafter Weise als mindestens eine LED ausgebildet, wobei auch ein LCD oder eine Segmentanzeige einsetzbar ist. Der Lichtleiter oder der lichtdurchlässige Abschnitt sind vorteilhaft formschlüssig, kraftschlüssig oder stoffschlüssig mit dem zweiten Gehäuseteil verbunden, wobei der Lichtleiter im Wesentlichen dieselben mechanischen Eigenschaften, insbesondere ähnliche Festigkeiten und ähnliche Wärmeausdehnungskoeffizienten wie der zweite Gehäuseteil aufweist und demnach keine Schwachstelle in Bezug auf die Stabilität des zweiten Gehäuseteils darstellt. In besonders vorteilhafter Weise ist der Lichtleiter oder der lichtdurchlässige Abschnitt von dem zweiten Gehäuseteil umspritzt, was zum einen eine formschlüssige bzw. stoffschlüssige unlösbare und zum anderen eine dichtende Verbindung ausbildet. Ebenfalls kann der lichtdurchlässige Abschnitt als eine Durchgangsöffnung ausgebildet sein, wobei das Leuchtmittel selbst formschlüssig oder kraftschlüssig und dichtend mit dem zweiten Gehäuseteil verbunden ist.

Die Erfindung wird nachfolgend anhand eines Ausführungsbeispiels mittels der Figuren näher erläutert, wobei
- **Fig. 1**: eine perspektivische Ansicht der Sensoreinheit,
- **Fig. 2**: eine perspektivische Explosionsansicht der Sensoreinheit,
- **Fig. 3**: einen Schnitt der Sensoreinheit in einer Seitenansicht und
- **Fig. 4**: einen weiteren Schnitt der Sensoreinheit in einer anderen Seitenansicht zeigen.

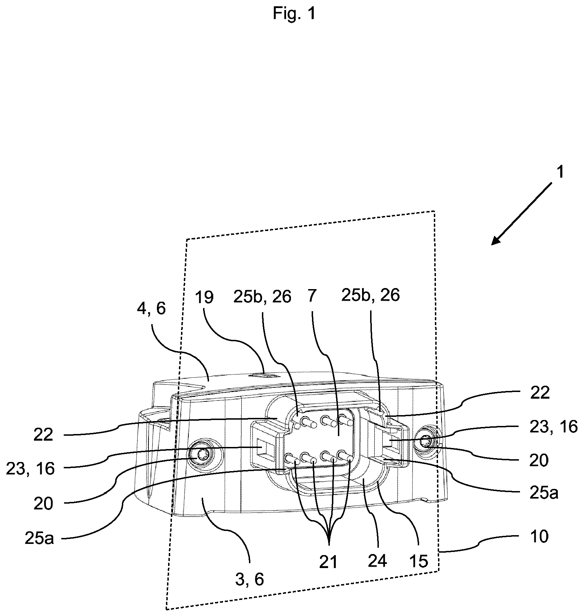

**Fig. 1** zeigt eine perspektivische Ansicht der Sensoreinheit 1, wobei die Sensoreinheit 1 einen ersten Gehäuseteil 3 und einen zweiten Gehäuseteil 4 aufweist, wobei die beiden Gehäuseteile 3, 4 mittels zwei Schrauben 20 kraftschlüssig miteinander verbunden sind. Der erste und der zweite Gehäuseteil 3, 4 weisen jeweils eine Gehäuseteilaußenseite 6 auf, wobei die Gehäuseteilaußenseite 6 des ersten Gehäuseteils 3 derart ausgebildet ist, dass an diesem ein Kontaktbereich 7 angeordnet ist, welcher von einer Ausformung 15 des ersten Gehäuseteils 3 umrandet ist. Die Ausformung 15 weist eine sich von einer Hauptebene 10 orthogonal weg erstreckende Länge auf, die länger als die Länge von Kontaktpunkten 21 des Kontaktbereichs 7 ist, um diese vor Stößen und anderen äußeren Einflüssen zu schützen. Weiter weist die Ausformung 15 an zwei sich gegenüberliegenden Ausformungswänden 22 jeweils eine Ausformungsöffnung 23 auf, was eine Verbindungsmöglichkeit 16 zur mechanischen Verbindung der Sensoreinheit 1 mit einer nicht dargestellten Maschineneinheit ausbildet. Die Ausformungsöffnungen 23 sind insbesondere mittels eines maschinenseitig angeordneten nicht dargestellten Schnapphakens durchsetzbar, um eine lösbare formschlüssige Verbindung zwischen Sensoreinheit 1 und Maschineneinheit auszubilden. Die Verbindungsmöglichkeit 16 ist weiter derart versetzt zu einer Ausformungsinnenfläche 24 der Ausformung 15 ausgebildet, dass eine Ausformungsführung 25a zum Anbringen der Sensoreinheit 1 an die Maschineneinheit ausgebildet ist. Darüber hinaus weist die Ausformung 15 an deren Ausformungsinnenfläche 24 zwei Ausformungsnuten 26 auf, wobei diese eine unterschiedliche Breite aufweisen. Die Ausformungsnuten 26 sind als weitere Ausformungsführungen 25b und zur Verhinderung eines unsachgemäßen Aufsteckens der Sensoreinheit 1 auf die Maschineneinheit ausgebildet. Der zweite Gehäuseteil 4 weist an seiner Gehäuseteilaußenseite 6 einen Lichtleiter 19 auf, der formschlüssig mit dem zweiten Gehäuseteil 4 verbunden ist, wobei der Lichtleiter 19 von dem zweiten Gehäuseteil 4 umspritzt ist.

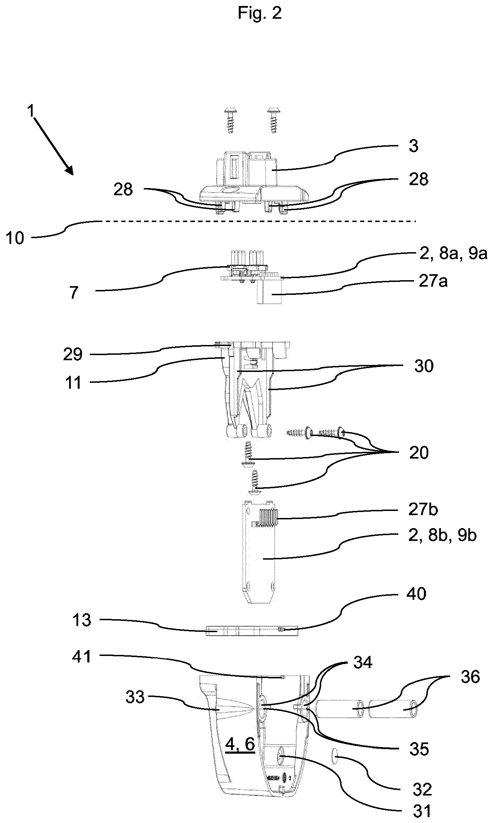

**Fig. 2** zeigt eine perspektivische Explosionsansicht der Sensoreinheit 1, wobei in einem nicht dargestellten Innenraum 5 zwischen erstem und zweitem Gehäuseteil 3, 4 eine Elektronikeinheit 2 mit einem ersten und einem zweiten Leiterplattenabschnitt 9a, 9b angeordnet ist, wobei die Leiterplattenabschnitte 9a, 9b erfindungsgemäß jeweils als einzelne Leiterplatten 8a, 8b ausgebildet sind. Die erste Leiterplatte 8a ist orthogonal zu der zweiten Leiterplatte 8b angeordnet, wobei die erste Leiterplatte 8a parallel zur Hauptebene 10 angeordnet ist und den Kontaktbereich 7 kontaktiert, wobei der Kontaktbereich 7 auf die erste Leiterplatte 8a mittels Kontaktpunkten 21 aufgesteckt und maschinell auf der ersten Leiterplatte 8a aufgelötet ist. Eine erste Übertragungseinheit 27a ist erfindungsgemäß ebenfalls auf der ersten Leiterplatte 8a angeordnet, wobei die erste Übertragungseinheit 27a eine, auf der zweiten Leiterplatte 8b angeordnete, zweite Übertragungseinheit 27b aufnimmt und damit die elektrisch leitende Verbindung zwischen erster und zweiter Leiterplatte 8a, 8b ausbildet. Zwischen erster und zweiter Leiterplatte 8a, 8b ist eine Stützkonstruktion 11 ausgebildet, die über eine Schraubverbindung durch jeweils zwei Schrauben 20 mit der ersten und zweiten Leiterplatte 8a, 8b verbunden ist. Die zwei Schrauben 20 zur Verbindung der Stützkonstruktion 11 mit der ersten Leiterplatte 8a werden in den ersten Gehäuseteil 3 eingeschraubt und die erste Leiterplatte 8a dadurch zwischen diesem und der Stützkonstruktion 11 verklemmt. Der erste Gehäuseteil 3 weist Nasen 28 auf, die in Stützkonstruktionsnuten 29 aufgenommen werden, um eine zuverlässige Positionierung der ersten Leiterplatte 8a und der Stützkonstruktion 11 an dem ersten Gehäuseteil 3 zu gewährleisten. Die Stützkonstruktion 11 weist eine Rahmen-/ Fachwerkkonstruktion auf, um auftretende Spannungen oder Kräfte aufzunehmen und diese möglichst direkt an die Leiterplatten 8a, 8b zu übertragen. Erfindungsgemäß weist die Stützkonstruktion 11 Führungsstege 30 auf, die in einer nicht sichtbaren Führung 12 des zweiten Gehäuseteils 4 geführt werden, wobei die Führung 12 als Nut ausgebildet ist. Die Breite des Führungssteges 30 nimmt in Richtung der Hauptebene 10 zu. Die nicht sichtbare Führung 12 ist in ihrer Breite von der Hauptebene 10 wegweisend verjüngt ausgebildet, sodass zwischen zweitem Gehäuseteil 4 und der Stützkonstruktion 11 eine kraftschlüssige Verbindung, insbesondere eine Verklemmung ausgebildet ist. Ein zuverlässiger Halt zwischen zweitem Gehäuseteil 4 und Stützkonstruktion 11 und damit auch Elektronikeinheit 2 und zweitem Gehäuseteil 4 ist demnach sichergestellt. Zwischen erstem und zweitem Gehäuseteil 3, 4 ist eine Formdichtung 13 ausgebildet. Weiter weist die Formdichtung 13 eine Formdichtungsnase 40 auf, welche in einer Formdichtungsaussparung 41 des zweiten Gehäuseteils 4 aufnehmbar ist. Durch diese Anordnung kann mit Vorteil auch im eingebauten Zustand erkannt werden, ob die Formdichtung 13 zwischen dem ersten und zweiten Gehäuseteil 3, 4 angeordnet ist. An einer Gehäuseteilaußenseite 6 des zweiten Gehäuseteils 4, welche gegenüber der Gehäuseteilaußenseite 6 ausgebildet ist, an der der nicht sichtbare Lichtleiter 19 angeordnet ist, weist der zweite Gehäuseteil 4 eine Druckausgleichsöffnung 31 auf, die einseitig von einer Druckausgleichsmembran 32 im Betriebszustand umgeben ist. Der zweite Gehäuseteil 4 weist darüber hinaus zwei abgesetzte Abschnitte 33 auf, wobei an den abgesetzten Abschnitten 33 Abschnittsöffnungen 34 ausgebildet sind, deren Achsen parallel zur Hauptebene 10 angeordnet sind und die wiederum parallel zur Hauptebene 10 verlaufende Abschnittsstege 35 zur Aufnahme jeweils einer Hülse 36 aufweisen. Die Hülsen 36 sind mittels der Abschnittsstege 35 innerhalb der Abschnittsöffnungen 34 verklemmbar anordenbar und zur Aufnahme einer Schraube und der damit verbundenen Klemmkraft ausgebildet. Demnach ist der zweite Gehäuseteil 4, welcher aus einem Kunststoff gefertigt ist, vor Beschädigung oder gar Zerstörung durch aufkommende Klemmkräfte geschützt.

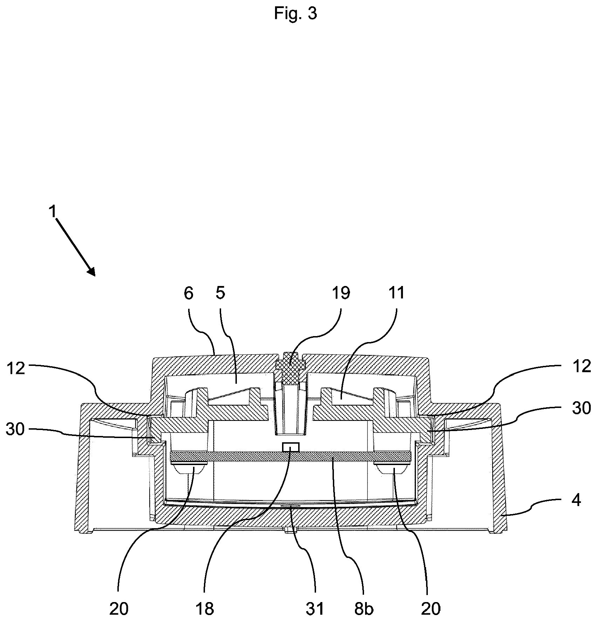

**Fig. 3** zeigt einen Schnitt der Sensoreinheit 1 in einer Seitenansicht, wobei die Führungsstege 30 der Stützkonstruktion 11 innerhalb der Führungen 12 des zweiten Gehäuseteils 4 aufgenommen sind. Die Führung 12 ist in die Bildebene hineinreichend als eine sich verjüngende Nut ausgebildet. Der Leichtleiter 19 ist derart ausgebildet, dass er von der Gehäuseteilaußenseite 6 in den Innenraum 5 hineinragt, wobei der Abstand zwischen Lichtleiter 19 und einem auf der zweiten Leiterplatte 8b angeordneten Leuchtmittel 18 möglichst gering ist, um eine ungewollte Streuung des Lichtes des Leuchtmittels 18 sowie eine Beschädigung der Leiterplatten 8a, 8b und des Leuchtmittels 18 bei De- und Montage zu verhindern. Das Leuchtmittel 18 ist als eine LED ausgebildet, welche die Zustände rot und grün aufweist, wobei rot für eine Störung und grün für eine störungsfreie Funktionalität der Sensoreinheit 1 steht. Die zweite Leiterplatte 8b ist mittels Schrauben 20 an der Stützkonstruktion 11 fest angeordnet. Gegenüberliegend von dem Lichtleiter 19 ist eine Druckausgleichsöffnung 31 an dem zweiten Gehäuseteil 4 angeordnet.

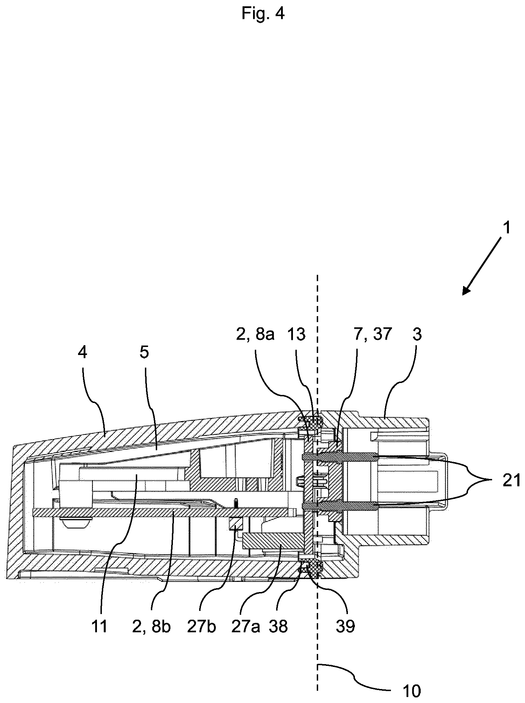

**Fig. 4** zeigt einen weiteren Schnitt der Sensoreinheit 1 in einer anderen Seitenansicht, wobei der erste Gehäuseteil 3 durch den Kontaktbereich 7 durchsetzt ist, welcher Kontaktpunkte 21 in Form von Pins, die die erste Leiterplatte 8a durchsetzen, sowie einen Kontaktrahmen 37 aufweist. Der Kontaktrahmen 37 ist zwischen den Kontaktpunkten 21 und dem ersten Gehäuseteil 3 angeordnet, liegt formschlüssig an dem ersten Gehäuseteil 3 an und ist mit den Kontaktpunkten 21 verpresst. Der Kontaktrahmen 37 ist in vorteilhafterweise aus einem zum ersten Gehäuseteil 3 vergleichbaren Material ausgebildet, um eine Übertragung von äußeren auf den ersten Gehäuseteil 3 einwirkenden Spannungen, Kräften oder Vibrationen direkt auf die Elektronikeinheit 2 zu übertragen. Um die erste Leiterplatte 8a liegt die Formdichtung 13 an dem zweiten Gehäuseteil 4 formschlüssig an, wobei der zweite Gehäuseteil 4 zum Formschluss einen einer Formdichtungsnut 38 der Formdichtung 13 entsprechenden Formdichtungssteg 39 aufweist. Eine Berührung der ersten und zweiten Leiterplatte 8a, 8b ist durch die Stützkonstruktion 11 verhindert, sodass die erste und zweite Leiterplatte 8a, 8b lediglich über die erste und zweite Übertragungseinheit 27a, 27b miteinander elektrisch leitend verbunden sind. Die erste und zweite Leiterplatte 8a und 8b befinden sich links von der Hauptebene 10, welche durch eine Anlagefläche zwischen erstem und zweiten Gehäuseteil 3, 4 definiert ist. Erster und zweiter Gehäuseteil 3, 4 sind derart an ihrer Anlagefläche ausgebildet, dass sie benachbart zur Anlagefläche die Formdichtung 13 zwischen sich derart aufnehmend sind, dass ein Überpressen und damit eine Beschädigung oder gar Zerstörung der Formdichtung 13 verhindert ist, ein funktionales Anpressen der Formdichtung 13 zur Ausbildung einer zuverlässigen Dichtheit des Innenraums 5 allerdings möglich ist. Der erste Gehäuseteil 3 ist den in den Innenraum 5 ragenden Teil der Elektronikeinheit 2 nicht überdeckend.

### BEZUGSZEICHENLISTE

- 1: Sensoreinheit
- 2: Elektronikeinheit
- 3: Erster Gehäuseteil
- 4: Zweiter Gehäuseteil
- 5: Innenraum
- 6: Gehäuseteilaußenseite
- 7: Kontaktbereich
- 8, 8a, 8b: Leiterplatte
- 9, 9a, 9b: Leiterplattenabschnitt
- 10: Hauptebene
- 11: Stützkonstruktion
- 12: Führung
- 13: Formdichtung

- 15: Ausformung
- 16: Verbindungsmöglichkeit
- 17: Optische Anzeige
- 18: Leuchtmittel
- 19: Lichtleiter
- 20: Schraube
- 21: Kontaktpunkt
- 22: Ausformungswand
- 23: Ausformungsöffnung
- 24: Ausformungsinnenfläche
- 25, 25a, 25b: Ausformungsführung
- 26: Ausformungsnut
- 27, 27a, 27b: Übertragungseinheit
- 28: Nase
- 29: Stützkonstruktionsnut
- 30: Führungssteg
- 31: Druckausgleichsöffnung
- 32: Druckausgleichmembran
- 33: Abgesetzter Abschnitt
- 34: Abschnittsöffnung
- 35: Abschnittsstege
- 36: Hülse
- 37: Kontaktrahmen
- 38: Formdichtungsnut
- 39: Formdichtungssteg
- 40: Formdichtungsnase
- 41: Formdichtungsaussparung

## Patentansprüche

1. Sensoreinheit (1) aufweisend eine Elektronikeinheit (2), einen ersten Gehäuseteil (3) und einen damit verbundenen zweiten Gehäuseteil (4), wobei erster und zweiter Gehäuseteil (3, 4) zwischen sich einen Innenraum (5) bilden und von diesem jeweils weggerichtet je eine Gehäuseteilaußenseite (6) aufweisen, wobei die Elektronikeinheit (2) mit dem ersten Gehäuseteil (3) verbunden und in den Innenraum (5) ragend ist, wobei ein den ersten Gehäuseteil (3) durchsetzenden Kontaktbereich (7) vorgesehen ist, wobei die Elektronikeinheit (2) mindestens eine Leiterplatte (8) mit mindestens zwei, miteinander elektrisch leitend verbundenen, Leiterplattenabschnitten (9) aufweist, wobei die mindestens zwei Leiterplattenabschnitte (9a, 9b) jeweils als einzelne Leiterplatten (8a, 8b) ausgebildet sind, wobei ein erster Leiterplattenabschnitt (9a) elektrisch leitend zwischen dem Kontaktbereich (7) und einem zweiten Leiterplattenabschnitt (9b) angeordnet ist, wobei eine erste Übertragungseinheit (27a) auf der ersten Leiterplatte (8a) angeordnet ist, wobei die erste Übertragungseinheit (27a) eine, auf der zweiten Leiterplatte (8b) angeordnete, zweite Übertragungseinheit (27b) aufnimmt und damit die elektrisch leitende Verbindung zwischen erster und zweiter Leiterplatte (8a, 8b) ausbildet, **dadurch gekennzeichnet, dass** die Sensoreinheit (1) eine am ersten Gehäuseteil (3) befestigte, und die Elektronikeinheit (2) kontaktierende Stützkonstruktion (11) aufweist, wobei die Stützkonstruktion (11) Führungsstege (30) aufweist, die in einer Führung (12) des zweiten Gehäuseteils (4) geführt sind, wobei die Führung (12) als Nut ausgebildet ist, wobei die Breite des Führungssteges (30) in Richtung einer Hauptebene (10) des ersten Gehäuseteils (3) zunimmt und die Führung (12) in ihrer Breite von der Hauptebene (10) wegweisend verjüngt ausgebildet ist, sodass zwischen zweitem Gehäuseteil (4) und der Stützkonstruktion (11) eine Verklemmung ausgebildet ist.

2. Sensoreinheit (1) nach Anspruch 1, **dadurch gekennzeichnet, dass** der erste Leiterplattenabschnitt (9a) im Betriebszustand an dem Kontaktbereich (7) anliegende elektrische Spannung und/oder Stromstärke an den zweiten Leiterplattenabschnitt (9b) im Wesentlichen unverändert übertragend ist.

3. Sensoreinheit (1) nach Anspruch 1 oder 2, **dadurch gekennzeichnet, dass** der erste Gehäuseteil (3) derart im wesentlichen plattenförmig ausgebildet ist, dass er einen geringeren Teil des in den Innenraum (5) ragenden Teils der Elektronikeinheit (2) überdeckt als der zweite Gehäuseteil (4).

4. Sensoreinheit (1) nach Anspruch 1, 2 oder 3, **dadurch gekennzeichnet, dass** der erste Gehäuseteil (3) weniger als 30%, insbesondere weniger als 20%, vorzugsweise weniger als 10% des in den Innenraum (5) ragenden Teils der Elektronikeinheit (2) überdeckt.

5. Sensoreinheit (1) nach Anspruch 3, **dadurch gekennzeichnet, dass** ein Leiterplattenabschnitt (9) der Elektronikeinheit (2) im Wesentlichen parallel zu der Hauptebene (10) des plattenförmigen ersten Gehäuseteils (3) orientiert und mit diesem an dem ersten Gehäuseteil (3) befestigt ist und/oder die zwei Leiterplattenabschnitte (9a, 9b) im Wesentlichen orthogonal zueinander angeordnet sind.

6. Sensoreinheit (1) nach einem der vorhergehenden Ansprüche, **dadurch gekennzeichnet, dass** zwischen erstem und zweitem Gehäuseteil (3, 4) eine Formdichtung (13) angeordnet ist.

7. Sensoreinheit (1) nach einem der vorhergehenden Ansprüche, **dadurch gekennzeichnet, dass** der Kontaktbereich (7) von einer Ausformung (15) des ersten Gehäuseteils (3) umrandend umgeben ausgebildet ist.

8. Sensoreinheit (1) nach einem der vorhergehenden Ansprüche, **dadurch gekennzeichnet, dass** der erste Gehäuseteil (3) mindestens eine Verbindungsmöglichkeit (16) zur mechanischen Verbindung der Sensoreinheit (1) mit einer Maschineneinheit aufweist.

9. Sensoreinheit (1) nach einem der vorhergehenden Ansprüche, **dadurch gekennzeichnet, dass** der zweite Gehäuseteil (4) eine optische Anzeige (17) aufweist, insbesondere eine durch ein auf der Leiterplatte (8) angeordnetes Leuchtmittel (18) und einem in dem zweiten Gehäuseteil (4) endenden Lichtleiter (19) und/oder ein durch einen lichtdurchlässigen Abschnitt im zweiten Gehäuseteil (4) gebildetes Leuchtmittel (18).

## Claims

1. Sensor unit (1) comprising an electronics unit (2), a first housing part (3) and a second housing part (4) connected thereto, the first and the second housing part (3, 4) forming therebetween an interior (5) and each having a housing part outer side (6) directed away from said interior, the electronics unit (2) being connected to the first housing part (3) and projecting into the interior (5), a contact region (7) that passes through the first housing part (3) being provided, the electronics unit (2) having at least one printed circuit board (8) which has at least two printed circuit board portions (9) that are electrically conductively connected to one another, the at least two printed circuit board portions (9a, 9b) each being designed as individual printed circuit boards (8a, 8b), a first printed circuit board portion (9a) being arranged electrically conductively between the contact region (7) and a second printed circuit board portion (9b), a first transmission unit (27a) being arranged on the first printed circuit board (8a), the first transmission unit (27a) accommodating a second transmission unit (27b) arranged on the second printed circuit board (8b) and thus forming the electrically conductive connection between the first and the second printed circuit board (8a, 8b),
**characterized in that** the sensor unit (1) has a support structure (11) which is fastened to the first housing part (3) and contacts the electronics unit (2), the support structure (11) having guide projections (30) which are guided in a guide (12) of the second housing part (4), the guide (12) being designed as a groove, the width of the guide projection (30) increasing in the direction of a main plane (10) of the first housing part (3) and the guide (12) being tapered in its width, pointing away from the main plane (10), such that clamping is established between the second housing part (4) and the support structure (11).

2. Sensor unit (1) according to claim 1, **characterized in that** the first printed circuit board portion (9a), in the operating state, transmits electrical voltage and/or current intensity applied at the contact region (7) to the second printed circuit board portion (9b) in a substantially unchanged manner.

3. Sensor unit (1) according to claim 1 or 2, **characterized in that** the first housing part (3) is designed to be substantially planar in such a way that it covers a smaller part of the part of the electronics unit (2) projecting into the interior (5) than the second housing part (4).

4. Sensor unit (1) according to claim 1, 2 or 3, **characterized in that** the first housing part (3) covers less than 30%, in particular less than 20%, preferably less than 10%, of the part of the electronics unit (2) projecting into the interior (5).

5. Sensor unit (1) according to claim 3,
**characterized in that** a printed circuit board portion (9) of the electronics unit (2) is oriented substantially in parallel with the main plane (10) of the planar first housing part (3) and is fastened therewith to the first housing part (3), and/or the two printed circuit board portions (9a, 9b) are arranged substantially orthogonally to one another.

6. Sensor unit (1) according to one of the preceding claims,
**characterized in that** a molded seal (13) is arranged between the first and the second housing part (3, 4).

7. Sensor unit (1) according to one of the preceding claims,
**characterized in that** the contact region (7) is designed to be surrounded by a formation (15) of the first housing part (3).

8. Sensor unit (1) according to one of the preceding claims,
**characterized in that** the first housing part (3) has at least one connection option (16) for mechanically connecting the sensor unit (1) to a machine unit.

9. Sensor unit (1) according to one of the preceding claims,
**characterized in that** the second housing part (4) has a visual display (17), in particular a by a lighting means (18) arranged on the printed circuit board (8) and a light guide (19) ending in the second housing part (4) and/or a lighting means (18) formed by a light-permeable portion in the second housing part (4).

## Revendications

1. Unité de capteur (1) présentant une unité électronique (2), une première partie de boîtier (3) et une seconde partie de boîtier (4) reliée à celle-ci, dans laquelle la première et la seconde partie de boîtier (3, 4) forment entre elles un espace intérieur (5) et présentent chacune un côté extérieur de partie de boîtier (6) orienté à l'opposé de celui-ci, dans laquelle l'unité électronique (2) est reliée à la première partie de boîtier (3) et dépasse dans l'espace intérieur (5), dans laquelle une zone de contact (7) traversant la première partie de boîtier (3) est prévue, dans laquelle l'unité électronique (2) présente au moins une carte de circuit imprimé (8) comportant au moins deux sections de carte de circuit imprimé (9) reliées entre elles de manière électriquement conductrice, dans laquelle les au moins deux sections de carte de circuit imprimé (9a, 9b) sont réalisées respectivement sous forme de cartes de circuit imprimé individuelles (8a, 8b), dans laquelle une première section de carte de circuit imprimé (9a) est disposée de manière électriquement conductrice entre la zone de contact (7) et une seconde section de carte de circuit imprimé (9b), dans laquelle une première unité de transmission (27a) est disposée sur la première carte de circuit imprimé (8a), dans laquelle la première unité de transmission (27a) reçoit une seconde unité de transmission (27b) disposée sur la seconde carte de circuit imprimé (8b) et forme ainsi la liaison électriquement conductrice entre la première et la seconde carte de circuit imprimé (8a, 8b), **caractérisée en ce que** l'unité de capteur (1) présente une structure de support (11) fixée sur la première partie de boîtier (3) et en contact avec l'unité électronique (2), dans laquelle la structure de support (11) présente des nervures de guidage (30) qui sont guidées dans un guidage (12) de la seconde partie de boîtier (4), dans laquelle le guidage (12) est réalisé sous la forme d'une rainure, dans laquelle la largeur de la nervure de guidage (30) augmente en direction d'un plan principal (10) de la première partie de boîtier (3) et le guidage (12) est réalisé de manière à se rétrécir dans sa largeur en s'éloignant du plan principal (10), de sorte qu'un serrage se forme entre la seconde partie de boîtier (4) et la structure de support (11).

2. Unité de capteur (1) selon la revendication 1, **caractérisée en ce que** la première section de carte de circuit imprimé (9a) transmet sensiblement sans modification, à l'état de fonctionnement, la tension électrique et/ou l'intensité de courant appliquée à la zone de contact (7) à la seconde section de carte de circuit imprimé (9b).

3. Unité de capteur (1) selon la revendication 1 ou 2, **caractérisée en ce que** la première partie de boîtier (3) est réalisée sensiblement en forme de plaque de telle sorte qu'elle recouvre une partie plus petite de la partie de l'unité électronique (2), faisant saillie dans l'espace intérieur (5), que la seconde partie de boîtier (4).

4. Unité de capteur (1) selon la revendication 1, 2 ou 3, **caractérisée en ce que** la première partie de boîtier (3) recouvre moins de 30 %, en particulier moins de 20 %, de préférence moins de 10 % de la partie de l'unité électronique (2) faisant saillie dans l'espace intérieur (5).

5. Unité de capteur (1) selon la revendication 3,
**caractérisée en ce qu'**une section de carte de circuit imprimé (9) de l'unité électronique (2) est orientée sensiblement parallèlement au plan principal (10) de la première partie de boîtier (3) en forme de plaque et est fixée avec celle-ci à la première partie de boîtier (3) et/ou les deux sections de carte de circuit imprimé (9a, 9b) sont disposées sensiblement orthogonalement l'une à l'autre.

6. Unité de capteur (1) selon l'une des revendications précédentes, **caractérisée en ce qu'**un joint profilé (13) est disposé entre la première et la seconde partie de boîtier (3, 4).

7. Unité de capteur (1) selon l'une des revendications précédentes, **caractérisée en ce que** la zone de contact (7) est réalisée de manière à être entourée et bordée par une conformation (15) de la première partie de boîtier (3).

8. Unité de capteur (1) selon l'une des revendications précédentes, **caractérisée en ce que** la première partie de boîtier (3) présente au moins une possibilité de liaison (16) destinée à relier mécaniquement l'unité de capteur (1) à une unité de machine.

9. Unité de capteur (1) selon l'une des revendications précédentes, **caractérisée en ce que** la seconde partie de boîtier (4) présente un affichage optique (17), en particulier un par un moyen d'éclairage (18) disposé sur la carte de circuit imprimé (8) et un guide de lumière (19) se terminant dans la seconde partie de boîtier (4) et/ou un moyen d'éclairage (18) formé par une section translucide dans la seconde partie de boîtier (4).
